# FASCICULE DE BREVET EUROPEEN

(11) **EP 3 463 985 B1**
(45) Date de publication et mention de la délivrance du brevet: **29.04.2020**
(21) Numéro de dépôt: 17731219.6
(22) Date de dépôt: 19.05.2017
(51) Int. Cl.: B60L 53/18, B65H 75/36, H02G 11/02, H02J 7/00

(54) **DISPOSITIF PORTATIF DE DÉVIDAGE D'UN CÂBLE ÉLECTRIQUE, NOTAMMENT UN CÂBLE DE CHARGE POUR UN VÉHICULE ÉLECTRIQUE OU HYBRIDE**
TRAGBARE VORRICHTUNG ZUM AUFWICKELN EINES ELEKTRISCHEN KABELS, INSBESONDERE EINES LADEKABELS FÜR EIN ELEKTRO- ODER HYBRIDFAHRZEUG
PORTABLE DEVICE FOR REELING AN ELECTRICAL CABLE, IN PARTICULAR A CHARGING CABLE FOR AN ELECTRIC OR HYBRID VEHICLE

(30) Priorité: 26.05.2016 FR 1654738
(43) Date de publication de la demande: 10.04.2019
(73) Titulaire: Renault s.a.s., 92100 Boulogne-Billancourt (FR)
(72) Inventeur: BUFFETAUD, Julien, 91320 Wissous (FR)
(86) Numéro de dépôt international: PCT/FR2017/051237
(87) Numéro de publication internationale: WO 2017/203140

(56) Documents cités:
- EP-A1- 0 692 849
- FR-A1- 2 833 415
- FR-A3- 2 990 049
- US-A- 3 217 245
- US-A1- 2015 008 878

## Description

La présente invention concerne un dispositif portatif de dévidage d'un câble électrique, notamment un câble de charge pour un véhicule électrique ou hybride.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle») sont aujourd'hui considérés comme la solution la plus prometteuse pour diminuer les émissions de CO₂.

Différentes technologies de stockage de l'énergie électrique ont été testées dans les dernières années afin de répondre aux besoins des EV. Il apparaît aujourd'hui que les batteries à cellules lithium-ion (Li-ion) sont celles susceptibles de fournir le meilleur compromis entre la densité de puissance, qui favorise les performances en termes d'accélération notamment, et la densité d'énergie, qui favorise l'autonomie. Cependant, l'utilisation de cette technologie Li-ion pour constituer des batteries de traction pour EV n'est pas sans poser de nombreuses difficultés, notamment si l'on considère les niveaux de tension nécessaires aux bornes de la batterie, de l'ordre de 400 volts (V), ou encore les niveaux de puissance de recharge nécessaires, de l'ordre de 2 à 3 kilowatts-heure en charge lente pendant plusieurs heures, jusqu'à plusieurs dizaines de kilowatts-heure en charge rapide pendant quelques dizaines de minutes. A de tels niveaux de puissance de charge, le câble de charge lui-même est soumis à de fortes contraintes.

La solution la plus connue, qui est également la plus simple, est de fournir un câble de charge « volant » de section large adaptée à la puissance de charge maximale envisagée, que l'on transporte dans le coffre du véhicule. Le principal inconvénient de cette solution est que, durant les phases de charge, le câble traine par terre et se salit. Donc, soit l'utilisateur le replie proprement (ce qui peut s'avérer compliqué compte-tenu de sa section importante) avant de le ranger dans son coffre et il se salit les mains, soit il le pose en vrac dans le coffre et il y a un risque non négligeable qu'il doive le démêler lorsqu'il en aura à nouveau besoin. Se salir les mains semble donc inévitable, et il s'agit là d'un inconvénient que la présente invention se propose de résoudre.

Pour éviter cet inconvénient, il est connu de l'état de la technique, notamment de la demande de brevet US2015/0008878A1, un dispositif de stockage d'un câble de charge comportant un dévidoir muni d'une manivelle pour dérouler et enrouler le câble, ainsi que d'une poignée pour transporter le dispositif. Il comporte également un boîtier de contrôle de la charge, intégré au centre du dévidoir, qui permet de piloter une charge lente sur prise standard. Un inconvénient majeur de cette solution est le risque d'échauffement. En effet, à des niveaux de puissance élevés pour charge rapide, les problèmes d'échauffement ne se limitent pas à la batterie : tous les éléments conducteurs impliqués dégagent une grande quantité de chaleur par effet joule et il est nécessaire de prendre en compte ce phénomène lors de la conception de l'ensemble de l'architecture électrique du véhicule. Ainsi, non seulement le câble de charge reliant le véhicule à la borne de charge doit être choisi de section suffisamment importante, mais il doit également être agencé d'une manière permettant d'évacuer la chaleur de manière contrôlée. Ce n'est manifestement pas le cas d'une solution par enroulement comme dans US2015/0008878A1, où le câble est non seulement enroulé de manière serrée, mais en plus il est enfermé, ce qui empêche tout phénomène de refroidissement par convexion.

On identifie ici le document de brevet FR 2 990 049 A3 concernant un câble de charge de véhicule électrique.

L'invention a notamment pour but de surmonter les inconvénients précités, notamment ceux liés aux salissures et au risque d'échauffement. A cet effet, l'invention a pour objet un dispositif portatif de dévidage d'un câble électrique comportant un élément de connexion à chacune de ses extrémités. Le dispositif comporte une poignée. La poignée accueille en son sein la partie sensiblement médiane du câble, les deux parties non-médianes du câble sortant de la poignée adjacentes l'une par rapport à l'autre. Le dispositif comporte un support flexible en forme de spirale plate apte à accueillir en son sein les deux parties non-médianes du câble sortant de la poignée et apte à s'enrouler autour de la poignée dans une configuration de rangement.

Avantageusement, le dispositif peut comporter en outre une bague apte à maintenir, dans la configuration de rangement, le support flexible enroulé autour de la poignée.

Par exemple, le support flexible peut comporter en son sein deux goulottes ouvertes sur les flancs latéraux opposés du support, les goulottes étant aptes à accueillir les deux parties non-médianes du câble.

Avantageusement, le dispositif peut comporter en outre un curseur apte à coulisser le long du support flexible, de sorte à exercer un appui sur les deux parties non-médianes du câble et à forcer leur insertion dans les deux goulottes simultanément.

Avantageusement, le support flexible en forme de spirale plate peut comporter sur ses flancs intérieur et extérieur à l'enroulement une saillie et un creux de formes complémentaires, la saillie étant apte, dans la configuration de rangement, à se loger dans le creux sans y laisser de jeu.

La présente invention a également pour objet un tel dispositif pour brancher un véhicule électrique ou hybride à une borne de charge.

Outre de faciliter le refroidissement du câble par simple convexion naturelle, le dispositif selon l'invention permet également de libérer la longueur voulue de câble de part et d'autre de son support et de sa poignée de manière indépendante, de sorte qu'il peut être disposé soit plus prêt du véhicule soit plus prêt de la prise de charge, en fonction des contraintes locales sur le site de charge, permettant notamment de limiter la longueur de câble touchant le sol.

D'autres caractéristiques et avantages de l'invention apparaîtront à l'aide de la description qui suit faite en regard de dessins annexés 1, 2, 3, 4, 5, 6, et 7 qui représentent schématiquement un mode de réalisation avantageux de l'invention.

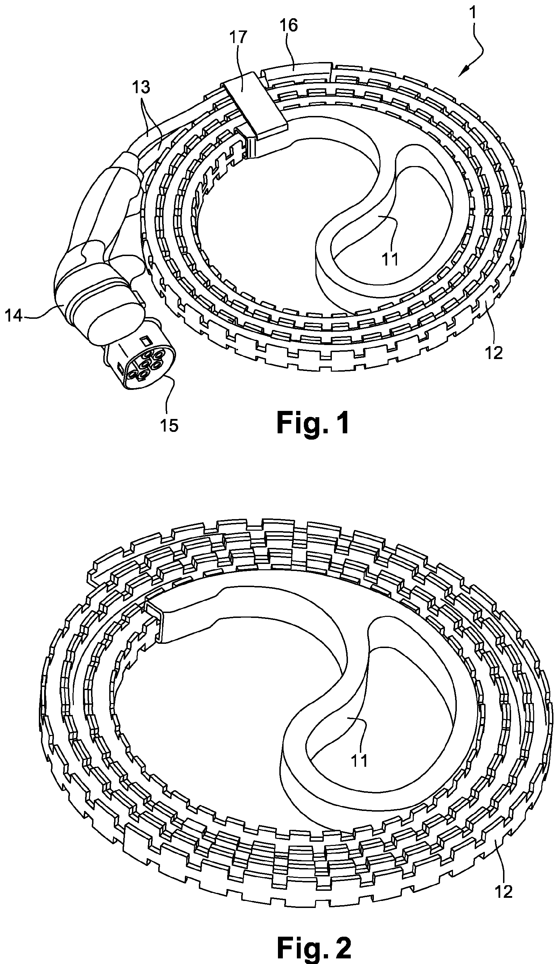

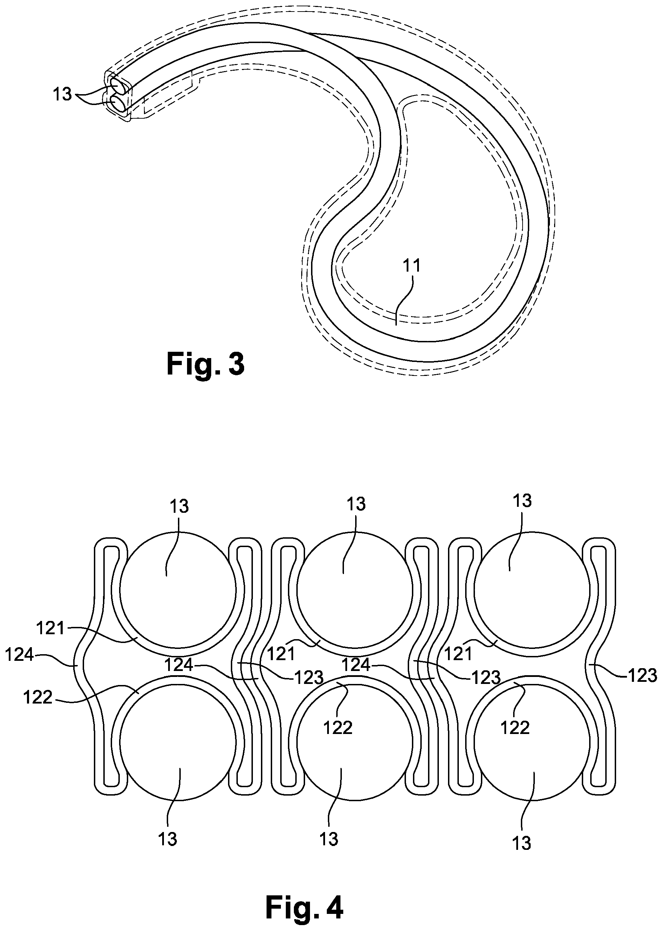

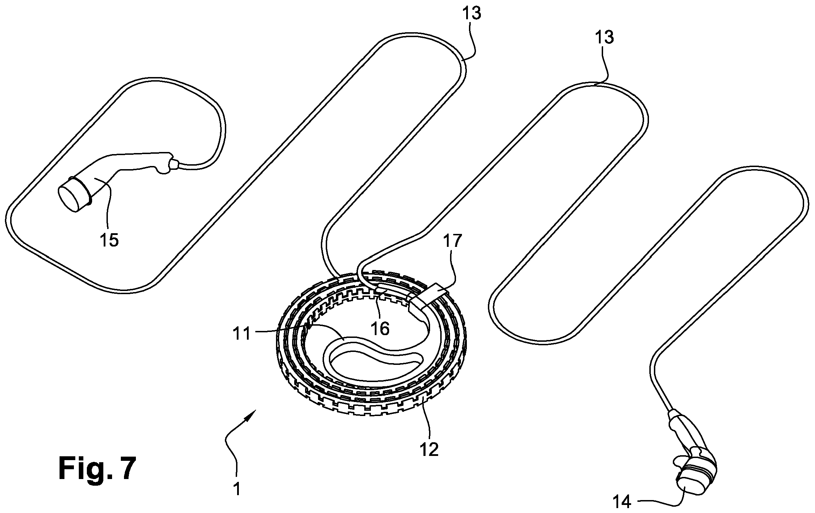

Les figures 1 à 7 illustrent un même dispositif 1 selon l'invention pour recharger un véhicule électrique ou hybride. La figure 1 illustre ce dispositif dans une configuration de rangement et la figure 7 l'illustre dans une configuration d'utilisation. Comme mieux illustré par la figure 2, le dispositif comporte une poignée 11 autour de laquelle est enroulé un support 12 pour un câble 13, le support 12 ayant la forme d'une spirale d'Archimède (ou spirale plate) et étant fait d'un matériau flexible. Aux deux extrémités du câble 13 sont disposées une fiche mâle 14 (équipée d'un capot de protection dans le présent exemple) et une fiche mâle 15 pour connexion à un véhicule électrique et à une borne de charge respectivement. Comme mieux illustrée par la figure 3, la partie sensiblement médiane du câble 13 est enchâssée dans le corps de la poignée 11. Comme mieux illustré par la figure 4, les parties non médianes du câble 13 situées de part et d'autre de la partie enchâssée dans la poignée 11 sont, quant à elles, aptes à être accueillies au sein du support 12 en spirale. Dans le présent exemple de réalisation, le support 12 et le câble 13 présentent chacun une longueur autorisant 3 tours d'enroulement autour de la poignée 11. Toutefois, en fonction du besoin opérationnel, la longueur du support 12 et du câble 13 peuvent être adaptés.

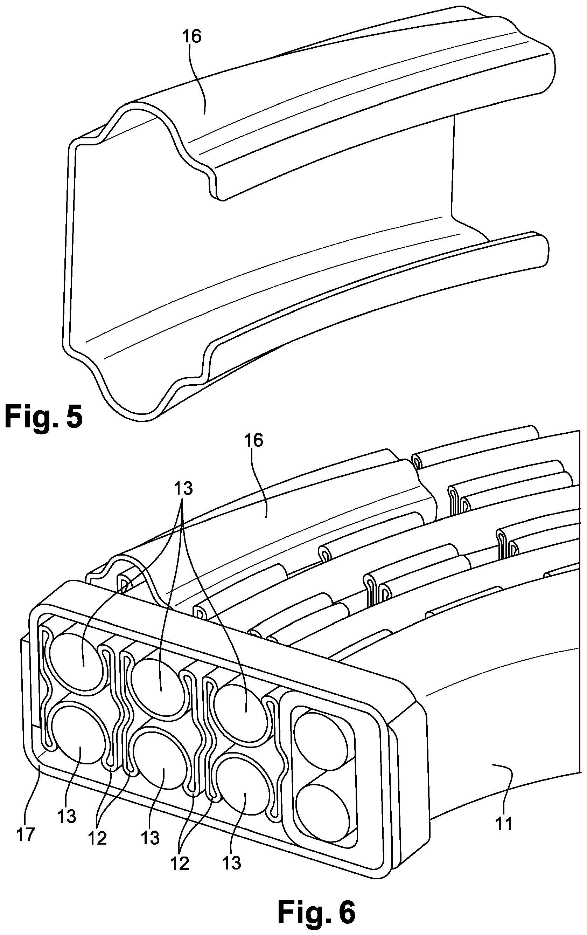

Sur la figure 4, une vue en coupe du support 12 montre, dans la configuration de rangement, le câble 13 emboîté au sein du support 12 sur les 3 tours d'enroulement. Le support 12 comporte en son sein deux goulottes 121 et 122 de même section cylindrique sensiblement complémentaire à la section du câble 13. Les goulottes 121 et 122 sont disposées symétriquement au sein du support 12, de sorte que leurs ouvertures respectives s'ouvrent sur les flancs latéraux opposés du support 12 (c'est-à-dire les flancs regardant dans les directions orthogonales au plan de la spirale formée par le support 12). Comme mieux illustré par les figures 5 et 6, un curseur 16 est apte à coulisser le long du support 12, de manière à exercer une force d'appui sur le câble 13 de part et d'autre du support 12, et ainsi forcer l'insertion du câble 13 au sein des deux goulottes 121 et 122 simultanément. La figure 4 montre également que le support 12 comporte sur son flanc intérieur à l'enroulement (c'est-à-dire le flanc regardant vers le centre de l'enroulement) une saillie 123 et sur son flanc opposé extérieur à l'enroulement (c'est-à-dire le flanc regardant dans la direction opposée au centre de l'enroulement) un creux 124 de forme complémentaire à la saillie 123, de sorte que la saillie 123 soit apte à venir se loger dans le creux 124 sans y laisser de jeu dans la configuration de rangement.

Comme mieux illustré par la figure 6, une bague de maintien 17 permet, dans la configuration de rangement du câble 13 inséré sur sensiblement toute sa longueur dans le support 12, de maintenir serré le support 12 spiralé contre la poignée 11 et donc de maintenir la saillie 123 logée dans le creux 124 sur toute la longueur du support 12, sans y laisser de jeu. Ainsi, le dispositif selon l'invention forme un ensemble compacte et rigide qui peut être aisément manipulé par la poignée 11, sans que le support 12 se déforme. Il peut par exemple être facilement déposé dans le coffre d'un véhicule. Avantageusement, la bague 17 étant souple et ouverte, elle peut s'ouvrir afin de libérer et dérouler le support 12. Il suffit alors de repousser le curseur 16 le long du support 12 et de tirer sur le câble 13 de part et d'autre du support 12 afin de libérer le câble 13 sur la longueur voulue. Comme illustré par la figure 7, dans une configuration d'utilisation, le câble 13 pouvant par exemple être complètement sorti du support 12 sauf en sa partie médiane enchâssée dans la poignée 11, le dispositif selon l'invention permet alors de brancher facilement un véhicule électrique ou hybride à une borne de recharge. En adaptant la longueur de câble 13 sortie du support 12, on peut aisément limiter voire empêcher le câble 13 de traîner par terre, et donc éviter de se salir les mains lors de la prochaine mise en charge du véhicule. En tous les cas, il ne sera pas nécessaire de toucher le câble 13 au moment de le ranger après la charge, il suffira alors de pousser le curseur 16, ce qui laisse au moins au câble 13 le temps de sécher. Avantageusement, comme illustré sur la figure 7, même dans cette configuration d'utilisation, la bague 17 peut être refermée de sorte que le support 12 reste complètement enroulé autour de la poignée 11 et ne de balade pas n'importe où, notamment il ne traîne pas au sol.

L'exemple de réalisation ci-dessus n'est donné qu'à titre d'illustration, l'invention étant applicable à tout appareil électrique nécessitant d'être branché périodiquement à une prise de courant.

Le dispositif selon l'invention a encore pour avantage d'être très léger et simple de conception, donc fiable. Il permet de dérouler le câble à la longueur voulue de chaque coté de sa poignée de manière indépendante, et ainsi le câble a peu de chance de trainer au sol. Il est également ergonomique avec sa poignée, dans le sens où son utilisation ne nécessite pas de se salir les mains et où il offre un encombrement limité : on peut le ranger facilement dans le coffre d'un véhicule sans pénaliser le volume utile pour les bagages. Enfin, le câble est bien aéré sur toute sa longueur et peut ainsi refroidir par simple convexion naturelle.

## Revendications

1. Dispositif (1) portatif de dévidage d'un câble électrique (13) comportant un élément de connexion (14, 15) à chacune de ses extrémités, le dispositif comportant une poignée (11), **caractérisé en ce que** :
- la poignée accueille en son sein la partie sensiblement médiane du câble, les deux parties non-médianes du câble sortant de la poignée adjacentes l'une par rapport à l'autre ;
- il comporte un support flexible (12) en forme de spirale plate apte à :
∘ accueillir en son sein les deux parties non-médianes du câble sortant de la poignée ;
∘ s'enrouler autour de la poignée dans une configuration de rangement.

2. Dispositif selon la revendication 1, **caractérisé en ce qu'**il comporte en outre une bague (17) apte à maintenir, dans la configuration de rangement, le support flexible (12) enroulé autour de la poignée (11).

3. Dispositif selon la revendication 1, **caractérisé en ce que** le support flexible (12) comporte en son sein deux goulottes (121, 122) ouvertes sur les flancs latéraux opposés du support, les goulottes étant aptes à accueillir les deux parties non-médianes du câble (13).

4. Dispositif selon la revendication 3, **caractérisé en ce qu'**il comporte en outre un curseur (16) apte à coulisser le long du support flexible (12), de sorte à exercer un appui sur les deux parties non-médianes du câble (13) et à forcer leur insertion dans les deux goulottes (121, 122) simultanément.

5. Dispositif selon la revendication 1, **caractérisé en ce que** le support flexible (12) en forme de spirale plate comporte sur ses flancs intérieur et extérieur à l'enroulement une saillie (124) et un creux (123) de formes complémentaires, la saillie étant apte, dans la configuration de rangement, à se loger dans le creux sans y laisser de jeu.

6. Dispositif selon l'une quelconque des revendications précédentes pour brancher un véhicule électrique ou hybride à une borne de charge.

## Patentansprüche

1. Tragbare Vorrichtung (1) zum Abwickeln eines Stromkabels (13), das an jedem seiner Enden ein Anschlusselement (14, 15) umfasst, wobei die Vorrichtung einen Griff (11) umfasst, **dadurch gekennzeichnet, dass**:
- der Griff in seinem Inneren den im Wesentlichen mittleren Teil des Kabels aufnimmt, wobei die beiden nicht-mittleren Teile des Kabels benachbart zueinander aus dem Griff austreten;
- sie einen flexiblen Träger (12) in Form einer flachen Spirale umfasst, der geeignet ist:
o in seinem Inneren die beiden aus dem Griff austretenden nicht-mittleren Teile des Kabels aufzunehmen;
o sich in einer Verstauanordnung um den Griff herum aufzurollen.

2. Vorrichtung nach Anspruch 1, **dadurch gekennzeichnet, dass** sie ferner einen Ring (17) umfasst, der geeignet ist, in der Verstauanordnung den um den Griff (11) herum aufgerollten flexiblen Träger (12) zu halten.

3. Vorrichtung nach Anspruch 1, **dadurch gekennzeichnet, dass** der flexible Träger (12) in seinem Inneren zwei Kanäle (121, 122) umfasst, die an den entgegengesetzten seitlichen Flanken des Trägers offen sind, wobei die Kanäle geeignet sind, die beiden nicht-mittleren Teile des Kabels (13) aufzunehmen.

4. Vorrichtung nach Anspruch 3, **dadurch gekennzeichnet, dass** sie ferner einen Schieber (16) umfasst, der geeignet ist, entlang des flexiblen Trägers (12) verschoben zu werden, so dass ein Druck auf die beiden nicht-mittleren Teile des Kabels (13) ausgeübt wird und ihr Einsetzen in die beiden Kanäle (121, 122) gleichzeitig erzwungen wird.

5. Vorrichtung nach Anspruch 1, **dadurch gekennzeichnet, dass** der flexible Träger (12) in Form einer flachen Spirale an seinen inneren und äußeren Flanken eine Ausstülpung (124) und eine Vertiefung (123) umfasst, die komplementär ausgebildet sind, wobei die Ausstülpung geeignet ist, in der Verstauanordnung spielfrei in die Vertiefung eingelassen zu werden.

6. Vorrichtung nach einem der vorhergehenden Ansprüche zum Anschließen eines Elektro- oder Hybridfahrzeugs an eine Ladestation.

## Claims

1. Portable device (1) for reeling an electrical cable (13) comprising a connection element (14, 15) at each of its ends, the device comprising a handle (11), **characterized in that**:
- the handle accommodates in its inside the substantially median part of the cable, with the two non-median parts of the cable exiting from the handle adjacent to one another;
- it comprises a flexible support (12) in the form of a flat spiral which can:
o accommodate in its inside the two non-median parts of the cable which exit from the handle;
o be wound around the handle in a storage configuration.

2. Device according to Claim 1, **characterized in that** it also comprises a ring (17) which can maintain the flexible support (12) wound around the handle (11) in the storage configuration.

3. Device according to Claim 1, **characterized in that** the flexible support (12) comprises in its inside two throats (121, 122) which open onto the opposite lateral flanks of the support, with the throats being able to accommodate the two non-median parts of the cable (13).

4. Device according to Claim 3, **characterized in that** it also comprises a slide (16) which can slide along the flexible support (12), such as to exert a support on the two non-median parts of the cable (13), and to force their insertion into the two throats (121, 122) simultaneously.

5. Device according to Claim 1, **characterized in that** the flexible support (12) in the form of a flat spiral comprises on its flanks inside and outside the winding a projection (124) and a hollow (123) with complementary forms, with the projection being able to be housed in the hollow without leaving a gap in it, in the storage configuration.

6. Device according to any one of the preceding claims, for plugging an electric or hybrid vehicle into a charging terminal.
